# EUROPEAN PATENT SPECIFICATION

(11) **EP 3 809 509 B1**
(45) Date of publication and mention of the grant of the patent: **27.07.2022**
(21) Application number: 20185972.5
(22) Date of filing: 11.05.2015
(51) Int. Cl.: H01M 10/0525, H01M 50/403, H01M 50/42, H01M 50/434, H01M 50/446, H01M 50/409, H01M 50/449

(54) **COMPOSITE DIAPHRAGM AND LITHIUM ION BATTERY USING SAME**
ZUSAMMENGESETZTE MEMBRAN UND LITHIUM-IONEN-BATTERIE DAMIT
DIAPHRAGME COMPOSITE ET BATTERIE AU LITHIUM-ION L'UTILISANT

(43) Date of publication of application: 21.04.2021
(62) Divisional of application: 15891488.7
(73) Proprietor: Contemporary Amperex Technology Co., Limited, Ningde City, Fujian 352100 (CN)
(72) Inventor: YUAN, Chenglong, Ningde, Fujian 352100 (CN); PENG, Ning, Ningde, Fujian 352100 (CN); GUO, Chao, Ningde, Fujian 352100 (CN); ZHANG, Shengwu, Ningde, Fujian 352100 (CN)
(74) Representative: Gong, Jinping

(56) References cited:
- EP-A1- 2 835 844
- WO-A1-2014/104677
- CN-A- 103 915 591
- CN-A- 104 332 578
- US-A1- 2014 287 294

## Description

### TECHNICAL FIELD

The present application relates to the field of lithium-ion battery technologies and, particularly relates to a composite separator for a lithium-ion battery and a lithium-ion battery using the composite separator.

### BACKGROUND

A lithium-ion battery has been widely used in mobile communication and electronic consumer products (for example, cell phones, notebook computers, etc.) because of its unique advantages of high power density. The currently developed lithium-ion battery with large capacity has been widely applied as a power source of electric vehicles. Generally, the lithium-ion battery includes a positive electrode, a negative electrode, a separator, an electrolyte, and cell structural parts. The separator is a key component in the lithium-ion battery, which is insulated from electrons but conductive for ions, and can separate a cathode from an anode of the lithium-ion battery, thereby preventing short circuit caused by direct contact of two electrodes of the cell. However, the separator is generally a porous membrane made of polyolefin polymers, and such polymers contract in high temperature environment, which results in large contact area between the positive electrode and the negative electrode of the cell, and rapidly generates large amount of heat, causing thermal runaway, burning or explosion of the battery. Such problem has become a key issue to be solved. After years' researches, an inorganic ceramic-coated separator, due to its excellent high-temperature resistance and safety performance, has been widely applied in the power battery field.

The inorganic ceramic-coated separator is formed by coating a layer of inorganic ceramic particles on a single surface or double surfaces of a porous polyolefin substrate. Since the inorganic ceramic powder material has hydrophilic surface with poor surface compatibility with a hydrophobic separator substrate, such as polyethylene (PE), polypropylene (PP), etc., it readily causes quality problems such as poor cohesive force of the coating layer during coating the ceramic powders, surface cracking, aging and change in porosity, etc., further causing detachment of the powders during subsequent winding of the separator. Moreover, the ceramic particles detached from the surface of the separator are sandwiched between the separator and the electrode, so that the separator will be punctured during a hot pressing test of the cell, causing a low rate of finished products. Even the cell passes the hot pressing test, the ceramic particles sandwiched between the separator and the electrode will cause micro-short circuit within the separator, high probability of subsequent self-discharging of the cell, and even severe safety problems (e.g., internal short circuit). In order to solve this problem, one object of the present application is to provide a method for preparing a ceramic-coated separator, which can improve cohesion force of the ceramic coating layer and interfacial adhesion force of the separator, thereby effectively solving the powder detachment and peeling problems of the ceramic layer coated on the surface of the polyolefin separator, and improving product quality and safety performance of the battery.

### SUMMARY

A purpose of the present application is to provide a method for preparing a separator for a lithium-ion battery as specified in any of claims 18 to 20, which can improve cohesion force of the inorganic particle coating layer. Interfacial adhesion force of the composite separator prepared by such method is also enhanced, which solves the problem of powder detachment of inorganic particles during preparing and winding of the composite separator. The composite separator of the present application combines an inorganic particle material with a specific functional group and a binder with a functional group matching with the specific functional group of the inorganic particle material, so that interaction (e.g., binding of hydrogen bonds) of the functional groups increases the adhesion force between the inorganic particles, thereby reducing the powder detachment and peeling problems due to weak adhesion force of the inorganic particles.

One aspect of the present application provides a composite separator for a lithium-ion battery as specified in any of claims 1 to 17, including a polyolefin substrate, and a coating layer formed on a surface of the polyolefin substrate. The coating layer includes a binder and inorganic particles, and a hydrogen bond is formed between the binder and the inorganic particles. Another aspect of the present invention is to provide a lithium-ion battery as specified in claim 21.

The binder includes an aqueous binder containing -CO- or -CN functional group; and the inorganic particles contain -OH functional group.

The binder is formed by polymerizing one or more monomers selected form a group consisting of acrylate, alkenyl carboxylate, and alkenyl nitrile.

The acrylate refers to a monomer having a structural formula shown in formula 1:

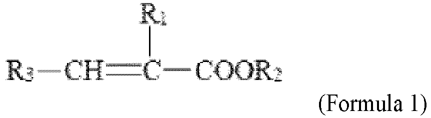

In formula 1, R₁ can be independently H or alkyl having 1-3 carbon atoms; R₂ can be independently alkyl having 1-4 carbon atoms; and R₃ can be independently H or alkyl having 1-3 carbon atoms.

The alkenyl carboxylate refers to a monomer having a structural formula shown in formula 2:

R₄-CH₂COOR₅ (Formula 2)

In formula 2, R₅ can be independently alkenyl having 2-4 carbon atoms; and R₄ can be independently H or alkyl having 1-3 carbon atoms.

The alkenyl nitrile refers to a monomer having a structural formula as shown in formula 3:

R₆-CN (Formula 3)

In formula 3, R₆ can be independently alkenyl having 2-5 carbon atoms.

Examples of the alkyl can include methyl, ethyl, propyl, isopropyl, and butyl. Examples of the alkenyl can include vinyl, propenyl, allyl, isopropenyl, butenyl, and pentenyl.

The acrylate is preferably methyl acrylate, ethyl acrylate, methyl methacrylate, or ethyl methacrylate.

The alkenyl carboxylate is preferably vinyl acetate.

The alkenyl nitrile is preferably acrylonitrile.

The binder can be polymerized by a conventional polymerization method, for example, bulk polymerization method and emulsion polymerization method. Reagents and additives in polymerization can be added during the polymerization according to actual need. Examples of the reagents and additives in polymerization may include initiator, catalyst, emulsifier, dispersant, molecular weight regulator, and terminator, etc.

The binder can further include carboxymethyl cellulose (CMC).

The inorganic particles are selected from a group consisting of boehmite particles, aluminum hydroxide particles, magnesium hydroxide particles, and combinations thereof.

A particle size D50 of the inorganic particles is 0.3µm<D50<3µm, and a particle size D100 of the inorganic particles is 1µm <D100<15µm.

A thickness of the composite separator is in a range of 6µm-30µm.

A thickness of the coating layer is in a range of 2µm -6µm.

The coating layer is formed on a single surface or double surfaces of the polyolefin substrate.

Another aspect of the present application provides a method for preparing a composite separator for a lithium-ion battery, using inorganic powder particles with a crystal structure containing covalent bond -OH functional group, and an aqueous binder containing -CO- or -CN functional group.

The composite separator of the present application is prepared by using inorganic powder particles with a crystal structure containing specific covalent bond -OH functional group, and a corresponding aqueous binder containing -CO- or -CN functional group to form an inorganic particle coating layer. The covalent bond -OH contained in the crystal structure and the -CO- or -CN contained in the binder form hydrogen bonding force shown as follows: 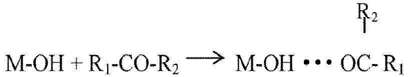 Hydrogen bonding principles M-OH+R₃-CN→M-OH···NC-R₃ Hydrogen bonding principles

Since the inorganic particles and the binder form a strong hydrogen bonding force, the adhesion force of the inorganic particles of the composite separator of the present application is greater than the coating layer of the separator disclosed in related literature using oxide ceramics such as aluminum oxide, silicon dioxide, etc.

Therefore, compared with the existing composite separator of the lithium-ion battery, the composite separator of the present application at least has the following beneficial effects:

The composite separator prepared in the present application adopts a binder and inorganic particles with specific functional groups, so that mutual coupling between the binder and the inorganic particles is enhanced, the hydrogen bonding improves the adhesion force of the coating layer, thereby reducing the problems of detachment of the inorganic particles due to poor adhesion force of the coating layer and surface cracking during actual coating process. In the present application, product quality of the lithium-ion battery using the composite separator is improved, and the risk of influencing the safety performance of the battery due to detachment of the inorganic particles is reduced.

### BRIEF DESCRIPTION OF DRAWINGS

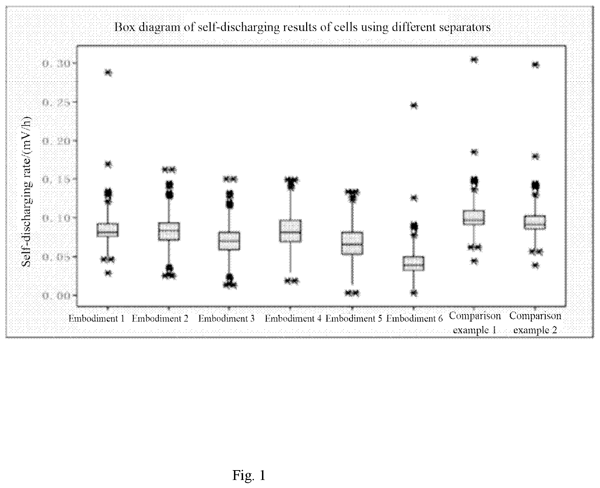

FIG. 1 illustrates a comparison graph of self-discharging test results of cells assembled with different separators in embodiments of the present application and comparison examples.

### DESCRIPTION OF EMBODIMENTS

The composite separator, the method for preparing the composite separator, and the lithium-ion battery using the composite separator of the present application are illustrated with reference to the embodiments.

### Embodiment 1:

Aluminum hydroxide (Al(OH)₃) particles (D50, 1.5µm; D100, 10µm) are selected as inorganic particles; and polymethyl methacrylate is selected as a binder. Firstly, deionized water is added into a planetary stirring tank, then the aluminum hydroxide particles are tiled within the deionized water to reach a solid content of 60%, then a mixture of the above described compositions is stirred for 60min, successively, the binder polymethyl methacrylate is added into the mixture at twice, the attached compositions on a tank wall is scraped once, and then the mixture is further stirred for 180min at a temperature of 25-35°C, so as to obtain a slurry. Subsequently, the slurry is transferred into an ultrafine dispersion machine and is dispersed. The dispersed slurry is uniformly coated on a single surface of a PE separator to form a coating layer with a thickness of 3µm. The coated separator is then dried in an oven and winded, so as to obtain a composite separator with an aluminum hydroxide particle coating layer for a lithium-ion battery. A thickness of the obtained composite separator is 15µm.

### Embodiment 2:

Boehmite particles (D50, 1.6µm; D100, 12µm) are selected as inorganic particles; and polyvinyl acetate is selected as a binder. A slurry is obtained according to the stirring procedure in Embodiment 1, and the obtained slurry is uniformly coated on a single surface of a PE separator to form a coating layer with a thickness of 3µm. The coated separator is then dried in an oven and winded, so as to obtain a composite separator with a boehmite particle coating layer for a lithium-ion battery. A thickness of the obtained composite separator is 15µm.

### Embodiment 3:

Boehmite particles (D50, 1.6µm; D100, 12µm) are selected as inorganic particles, and polymethyl acrylate is selected as a binder. A slurry is obtained according to the stirring procedure in Embodiment 1, and the obtained slurry is uniformly coated on a single surface of a PE separator to form a coating layer with a thickness of 3µm. The coated separator is then dried in an oven, and winded, so as to obtain a composite separator with a boehmite particle coating layer for a lithium-ion battery. A thickness of the obtained composite separator is 15µm.

### Embodiment 4:

Magnesium hydroxide particles containing -OH (D50, 1.4µm; D100, 10µm) are selected as inorganic particles, and a binder is acrylic emulsion (manufactured by Qingdao Dike New Material Corporation, Ltd). A slurry is obtained according to the stirring procedure in Embodiment 1, and the obtained slurry is uniformly coated on a single surface of a PE separator to form a coating layer with a thickness of 3µm. The coated separator is then dried in an oven and winded, so as to obtain a composite separator with a magnesium hydroxide coating layer for a lithium-ion battery. A thickness of the obtained composite separator is 15µm.

### Embodiment 5:

Boehmite particles (D50, 1.5µm; D100, 12µm) are selected as inorganic particles, and a binder is a water soluble acrylonitrile containing -CN functional group (LA132, manufactured by Xuzhou Zhuoyuan Chemical Corporation, Ltd). A slurry is obtained according to the stirring procedure in Embodiment 1, and the obtained slurry is uniformly coated on a single surface of a PE separator to form a coating layer with a thickness of 3µm. The coated separator is then dried in an oven, and winded, so as to obtain a composite separator with a boehmite particle coating layer for a lithium-ion battery. A thickness of the obtained composite separator is 15µm.

### Embodiment 6:

In order to further improve the stability of the slurry and coating adhesion force, 0.4% CMC binder is further added in the formulation of Embodiment 3. The obtained slurry is coated and dried, and the obtained separator is winded, so as to obtain a composite separator for a lithium-ion battery. A thickness of the obtained composite separator is 15µm.

### Embodiment 7:

Boehmite particles (D50, 1.6µm; D100, 12µm) are selected as inorganic particles, and a binder is polymethyl acrylate copolymer. A slurry is obtained according to the stirring procedure in Embodiment 1, and the obtained slurry is uniformly coated on double surfaces of a PE separator to form two coating layers (each coating layer has a thickness of 2µm) on the surfaces of the PE separator. The coated separator is then dried in an oven, and is winded, so as to obtain a composite separator with two boehmite particle coating layers for a lithium-ion battery. A thickness of the obtained composite separator is 6µm.

Comparison example 1: Polyvinyl acetate is selected as a binder, and conventional aluminum oxide inorganic particles without covalent bond -OH are used to prepare aluminum oxide ceramic particles. A slurry containing the binder and the ceramic particles is obtained according to the stirring procedure in Embodiment 1, and the obtained slurry is uniformly coated on a single surface of a PE separator to form a coating layer with a thickness controlled in a range of 2-4 µm. The coated separator is then dried and winded, so as to obtain a composite separator with a ceramic coating layer for a lithium-ion battery.

Comparison example 2: Boehmite particles are selected as inorganic particles, and PVDF polymer without -CO- or -CN is used as a binder. A slurry containing the inorganic particles and the binder is obtained according to the stirring procedure in Embodiment 1, and the obtained slurry is uniformly coated on a single surface of a PE separator to form a coating layer with a thickness controlled in a range of 2-4µm. The coated separator is then dried and winded, so as to obtain a composite separator with a boehmite particle coating layer for a lithium-ion battery.

### Preparation of lithium-ion battery:

Lithium iron phosphate (LFP) is used as a cathode active material. 90wt% LFP active material is added into N-methyl-2-pyrrolidone (NMP) solvent, then 5wt% acetylene black as a conductive agent and 5wt% polyvinylidene fluoride (PVDF) as a binder are added, stirred, and dispersed so as to form a cathode slurry. The obtained cathode slurry is uniformly coated on an aluminum foil current collector with a thickness of 20µm, then dried, and cold pressed so as to form a cathode plate.

Graphite (C) is used as an anode active material. 92wt% graphite (C) is added into a deionized water solvent, then 3wt% carbon black as a conductive agent, and 1.5wt% hydroxymethyl cellulose (CMC) and 3.5wt% styrene-butadiene rubber (SBR) as the binder are added, stirred, and dispersed so as to form an anode slurry. The obtained anode slurry is uniformly coated on a copper foil current collector with a thickness of 8µm, then dried, and cold pressed so as to form a anode plate.

The anode plate and cathode plate as prepared above and the eight different composite separators from Embodiment 1-6 and Comparison examples 1-2 are winded to form cell assembles, respectively. Each cell assembly is hot pressed, packaged, and then injected with an electrolyte solution (electrolyte: 1mol/L lithium hexafluorophosphate, solvent (volume ratio): vinyl carbonate: dimethyl carbonate=1: 2) , so as to obtain a lithium-ion battery.

### Test example 1: the cohesion force of the coating layers of different composite separators coated with the coating layers is analyzed.

Test samples are the different composite separators with coating layers for lithium-ion batteries obtained according to Embodiments 1-7, and contrast samples are the composite separator prepared by using aluminum oxide particles without covalent bond -OH in Comparison example 1 and the composite separator prepared by using boehmite particles and the binder without -CO- or -CN in Comparison example 2. The cohesion force of the coating layers is tested by a method as follows: a green glue is adhered on a surface of the composite separator, then a 50N compression roller is used to roll on the green glue adhered on the composite separator for three times, and then a tesometer is used to 180° peel the green glue with a speed of 5mm/min. The tested results are shown in Table 1. It can be known from Table 1 that: the adhesion force of the coating layer in the composite separators prepared by the method of the present application is greater than that of Comparison examples 1-2, and the improvement on cohesion force of the coating layer can reduce the powder detachment and peeling problems of the inorganic particles in a subsequent process.

**Table 1 Test result of cohesion force of coating layers of different separators in the Embodiments and Comparison examples**

| Test object | Embodi ment 1 | Embodim ent 2 | Embodim ent 3 | Embodim ent 4 | Embodi ment 5 | Embodi ment 6 | Embodi ment 7 | Comparis on example 1 | Comparis on example 2 |
|---|---|---|---|---|---|---|---|---|---|
| Adhesion force of the coating layer/N | 6.5 | 7.2 | 8.7 | 7.5 | 8.3 | 9.8 | 9.0 | 5.5 | 5.6 |

### Test example 2: comparison of short circuit rate during assembling and hot pressing of the cell.

The cathode plate, the anode plate, and the several different ceramic-coated separators obtained in Embodiment 1-7 and Comparison examples 1-2 are winded to form different cell assemblies. Each cell assembly is hot pressed with a force of 1000kgf under a temperature of 80°C, and then tested for short circuit by a Hi-pot tester (voltage: 200V; internal resistance: 20MΩ). Internal short circuit results of cells with different ceramic separators are provided in Table 2. It can be known from the testing results that, the short circuit rate of cells using the composite separators prepared with boehmite ceramic particles containing -OH and binder containing -CO- or -CN in the Embodiments is significantly lower than that of the cells in Comparison examples 1-2. This is because adhesion force of the coating layer formed by boehmite ceramic particles containing covalent bond -OH and the binder containing -CO- or -CN is increased due to the hydrogen bonding effect during the preparation of the composite separator. While the adhesion force of the coating layer is relatively small, when it is formed by aluminum oxide without covalent bond -OH and the binder containing -CO- or -CN, or formed by boehmite ceramic particles containing covalent bond -OH and PVDF without -CO- or -CN, thus ceramic particles easily detach and get sandwiched between the electrode plate and the separator during cutting and winding of the composite separator, resulting in that the separator is punctured by the ceramic particles under high pressure. Therefore, ceramic particle black points can be seen on the surface of the separator when the cell is disassembled.

**Table 2: Short circuit results of cells formed by ceramic separators**

| Test object | Embodim ent 1 | Embodim ent 2 | Embodim ent 3 | Embodim ent 4 | Embodim ent 5 | Embodim ent 6 | Embodim ent 7 | Comparis on example 1 | Comparis on example 2 |
|---|---|---|---|---|---|---|---|---|---|
| Short circuit rate | 0.15% | 0.11% | 0.05% | 0.12% | 0.09% | 0.02% | 0.03% | 0.25% | 0.23% |

### Test example 3: comparison of self-discharging rates of lithium-ion batteries assembled with different separators

Self-discharging rates of the above prepared lithium-ion batteries using ceramic-coated separators obtained in different embodiments and comparison examples are tested for comparison. The batteries are fully charged to 3.65V, and voltages of the tested batteries are tested and recorded as Vo; the batteries are then let standby for 30 days at a high environment temperature of 45 °C, and the voltage is tested again and recorded as Vi. Self-discharging result of the lithium-ion battery within unit time (i.e., self-discharging rate) is calculated by an equation: Self-discharging rate=(V₀-V₁)/(30^{∗}24h), so as to obtain the unit time self-discharge results of lithium-ion batteries prepared by using different separators, as shown in FIG. 1. It can be known from FIG. 1 that, self-discharging rates of the lithium-ion batteries assembled by using the separators prepared in Embodiment 1-6 are lower than self-discharging rates of the lithium-ion batteries assembled by using the separators prepared in Comparison examples land 2. The principles lie in that: since the cohesion force of the coating layers of the ceramic-coated separators prepared in Comparison examples 1 and 2 is small during entire preparation of the separators, and the ceramic particles easily detach and get sandwiched inside the cell, and the sandwiched ceramic particles puncture the separator after charge-discharge test, resulting in micro-short circuit inside the battery and causing irreversible reaction, further speeding self-discharging rate within the battery.

In summary, based on comparison of the test data, we can conclude that, adhesion force of the coating layer of the composite separator prepared by using boehmite inorganic ceramic particles, short circuit rate of cells using the composite separator, and self-discharging rate of batteries using the composite separator are better than the existing aluminum oxide ceramic-coated separator; in addition, from the contrast data of Embodiment 6, it can be found that the separator prepared by using a composite binder of polymethyl acrylate and CMC demonstrates the optimum performance. By comparing data of Embodiment 7 and Embodiment 3, it can be found that the cohesion force of the coating layer and cell short circuit situation of a double-surface coated separator is better than those of a single-surface coated separator.

Further embodiments of the present invention are provided in the following. It should be noted that the numbering used in the following section does not necessarily need to comply with the numbering used in the previous sections.

Embodiment 1. A composite separator for a lithium-ion battery, comprising a polyolefin substrate and a coating layer formed on a surface of the polyolefin substrate, the coating layer comprising a binder and inorganic particles, wherein a hydrogen bond is formed between the binder and the inorganic particles.

Embodiment 2. The composite separator for a lithium-ion battery according to claim 1, wherein the binder comprises an aqueous binder containing -CO- or -CN functional group, and the inorganic particles contain -OH functional group.

Embodiment 3. The composite separator for a lithium-ion battery according to embodiment 2, wherein the binder is formed by polymerizing one or more monomers selected from a group consisting of acrylate, alkenyl carboxylate, and alkenyl nitrile.

Embodiment 4. The composite separator for a lithium-ion battery according to embodiment 2, wherein the binder further comprises carboxymethyl cellulose.

Embodiment 5. The composite separator for a lithium-ion battery according to embodiment 2, wherein the inorganic particles are selected from a group consisting of boehmite particles, aluminum hydroxide particles, magnesium hydroxide particles, and combinations thereof.

Embodiment 6. The composite separator for a lithium-ion battery according to embodiment 2, wherein D50 of the inorganic particles is smaller than 3µm, and D100 of the inorganic particles is smaller than 15µm.

Embodiment 7. The composite separator for a lithium-ion battery according to embodiment 1, wherein a thickness of the composite separator is in a range of 6µm-30µm.

Embodiment 8. The composite separator for a lithium-ion battery according to embodiment 1, wherein a thickness of the coating layer is in a range of 2-6µm.

Embodiment 9. The composite separator for a lithium-ion battery according to embodiment 1, wherein the coating layer is formed on a single surface or double surfaces of the polyolefin substrate.

Embodiment 10. A lithium-ion battery, comprising the composite separator for a lithium-ion battery according to any one of embodiments 1-9.

The embodiments are merely used to explain the invention concept of the present application, rather than limit the present application. It should be understood that, the present application can further include many other embodiments, and those skilled in the art can also make various changes and modifications to the present application without departing from essence of the present application, and all those changes and modifications shall fall into the protection scope of the claims of the present application.

## Claims

1. A composite separator for a lithium-ion battery, comprising a polyolefin substrate and a coating layer formed on a surface of the polyolefin substrate, the coating layer comprising a binder and inorganic particles, wherein a hydrogen bond is formed between the binder and the inorganic particles, wherein the binder comprises an aqueous binder containing -CO- or -CN functional group, and the inorganic particles contain -OH functional group, **characterized in that**, a particle size D100 of the inorganic particles is 1µm <D100<15µm.

2. The composite separator for a lithium-ion battery according to claim 1, wherein the binder is formed by polymerizing one or more monomers selected from a group consisting of acrylate, alkenyl carboxylate, and alkenyl nitrile.

3. The composite separator for a lithium-ion battery according to claim 2, wherein the acrylate is a monomer having a structural formula shown in formula 1: 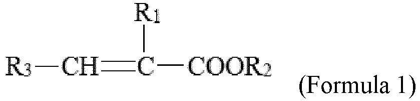 wherein R₁ is independently H or alkyl having 1-3 carbon atoms; R₂ is independently alkyl having 1-4 carbon atoms; and R₃ is independently H or alkyl having 1-3 carbon atoms.

4. The composite separator for a lithium-ion battery according to claim 2, wherein the alkenyl carboxylate is a monomer having a structural formula shown in formula 2:
R₄-CH₂COOR₅ (Formula 2)
wherein R₅ is independently alkenyl having 2-4 carbon atoms; and R₄ is independently H or alkyl having 1-3 carbon atoms.

5. The composite separator for a lithium-ion battery according to claim 2, wherein the alkenyl nitrile is a monomer having a structural formula as shown in formula 3:
R₆-CN (Formula 3)
wherein R₆ is independently alkenyl having 2-5 carbon atoms.

6. The composite separator for a lithium-ion battery according to claims 2 or 3, wherein the acrylate is methyl acrylate, ethyl acrylate, methyl methacrylate, or ethyl methacrylate.

7. The composite separator for a lithium-ion battery according to claims 2 or 4, wherein the alkenyl carboxylate is vinyl acetate.

8. The composite separator for a lithium-ion battery according to claims 2 or 5, wherein the alkenyl nitrile is acrylonitrile.

9. The composite separator for a lithium-ion battery according to any of claims 2 to 8, wherein the polymerization is at least one of bulk polymerization and emulsion polymerization.

10. The composite separator for a lithium-ion battery according to any of claims 2 to 9, wherein reagents and additives in polymerization can be added during the polymerization; wherein preferably, the reagents and additives in polymerization include at least one of initiator, catalyst, emulsifier, dispersant, molecular weight regulator, and terminator.

11. The composite separator for a lithium-ion battery according to any of claims 1 to 10, wherein the binder further comprises carboxymethyl cellulose (CMC).

12. The composite separator for a lithium-ion battery according to any of claims 1 to 11, wherein the inorganic particles are selected from a group consisting of boehmite particles, aluminum hydroxide particles, magnesium hydroxide particles, and combinations thereof.

13. The composite separator for a lithium-ion battery according to any of claims 1 to 12, wherein a particle size D50 of the inorganic particles is D50<3µm, and a particle size D100 of the inorganic particles is D100<15µm.

14. The composite separator for a lithium-ion battery according to any of claims 1 to 13, wherein the particle size D50 of the inorganic particles is 0.3µm<D50, and the particle size D100 of the inorganic particles is 1µm <D100.

15. The composite separator for a lithium-ion battery according to any of claims 1 to 14, wherein a thickness of the composite separator is in a range of 6µm-30µm.

16. The composite separator for a lithium-ion battery according to any of claims 1 to 15, wherein a thickness of the coating layer is in a range of 2µm-6µm.

17. The composite separator for a lithium-ion battery according to any of claims 1 to 16, wherein the coating layer is formed on a single surface or double surfaces of the polyolefin substrate.

18. A method for preparing a composite separator for a lithium-ion battery, comprising:
using inorganic powder particles with a crystal structure containing covalent bond -OH functional group, and an aqueous binder containing -CO- or -CN functional group,
forming a coating layer comprising the binder and the inorganic particles,
**characterized in that**, a particle size D100 of the inorganic particles is 1µm <D100<15µm.

19. The method for preparing a composite separator for a lithium-ion battery according to claim 18, comprising:
stirring inorganic powder particles with a crystal structure containing specific covalent bond -OH functional group with solvent;
adding aqueous binder containing -CO- or -CN functional group and stirring;
dispersing, and obtaining a dispersed slurry to-be-coated;
coating the dispersed slurry on at least one of the surfaces of the polyolefin substrate;
drying and winding.

20. The method for preparing a composite separator for a lithium-ion battery according to claims 18 or 19, wherein carboxymethyl cellulose (CMC) is added in the step of adding aqueous binder containing -CO- or -CN functional group.

21. A lithium-ion battery, comprising the composite separator for a lithium-ion battery according to any of claims 1-17.

## Patentansprüche

1. Verbundseparator für eine Lithiumionenbatterie, umfassend ein Polyolefinsubstrat und eine Beschichtungsschicht, die auf einer Oberfläche des Polyolefinsubstrats gebildet ist, wobei die Beschichtungsschicht ein Binder und anorganische Partikel umfasst, wobei eine Wasserstoffbrücke zwischen dem Binder und den anorganischen Partikeln gebildet ist, wobei der Binder einen wässrigen Binder umfasst, der -CO- oder -CN funktionelle Gruppe enthält, und die anorganischen Partikel -OH funktionelle Gruppe enthält, **dadurch gekennzeichnet, dass** eine Partikelgröße D100 der anorganischen Partikel 1 µm < D100 < 15 µm beträgt.

2. Verbundseparator für eine Lithiumionenbatterie gemäß Anspruch 1, wobei der Binder durch Polymerisieren eines oder mehrerer Monomere ausgewählt aus einer Gruppe bestehend aus Acrylat, Alkenylcarboxylat und Alkenylnitril gebildet ist.

3. Verbundseparator für eine Lithiumionenbatterie gemäß Anspruch 2, wobei das Acrylat ein Monomer mit einer in Formel 1 gezeigten Strukturformel ist: 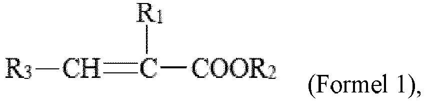 wobei R₁ unabhängig H oder Alkyl mit 1-3 Kohlenstoffatomen ist; R₂ unabhängig Alkyl mit 1-4 Kohlenstoffatomen ist; und R₃ unabhängig H oder Alkyl mit 1-3 Kohlenstoffatomen ist.

4. Verbundseparator für eine Lithiumionenbatterie gemäß Anspruch 2, wobei das Alkenylcarboxylat ein Monomer mit einer in Formel 2 gezeigten Strukturformel ist:
R₄-CH₂COOR₅ (Formel 2),
wobei R₅ unabhängig Alkenyl mit 2-4 Kohlenstoffatomen ist; und R₄ unabhängig H oder Alkyl mit 1-3 Kohlenstoffatomen ist.

5. Verbundseparator für eine Lithiumionenbatterie gemäß Anspruch 2, wobei das Alkenylnitril ein Monomer mit einer in Formel 3 gezeigten Strukturformel ist:
R₆-CN (Formel 3),
wobei R₆ unabhängig Alkenyl mit 2-5 Kohlenstoffatomen ist.

6. Verbundseparator für eine Lithiumionenbatterie gemäß Ansprüchen 2 oder 3, wobei das Acrylat Methylacrylat, Ethylacrylat, Methylmethacrylat oder Ethylmethacrylat ist.

7. Verbundseparator für eine Lithiumionenbatterie gemäß Ansprüchen 2 oder 4, wobei das Alkenylcarboxylat Vinylacetat ist.

8. Verbundseparator für eine Lithiumionenbatterie gemäß Ansprüchen 2 oder 5, wobei das Alkenylnitril Acrylnitril ist.

9. Verbundseparator für eine Lithiumionenbatterie gemäß einem der Ansprüche 2 bis 8, wobei die Polymerisation wenigstens eines von Massepolymerisation und Emulsionspolymerisation ist.

10. Verbundseparator für eine Lithiumionenbatterie gemäß einem der Ansprüche 2 bis 9, wobei Reagenzien und Zusatzstoffe bei der Polymerisation während der Polymerisation zugegeben werden können; wobei die Reagenzien und Zusatzstoffe bei der Polymerisation vorzugsweise wenigstens eines von Initiator, Katalysator, Emulgator, Dispergiermittel, Molekulargewichtsregulator und Terminator enthalten.

11. Verbundseparator für eine Lithiumionenbatterie gemäß einem der Ansprüche 1 bis 10, wobei der Binder ferner Carboxymethylcellulose (CMC) umfasst.

12. Verbundseparator für eine Lithiumionenbatterie gemäß einem der Ansprüche 1 bis 11, wobei die anorganischen Partikel ausgewählt sind aus einer Gruppe bestehend aus Böhmitpartikeln, Aluminiumhydroxidpartikeln, Magnesiumhydroxidpartikeln und Kombinationen davon.

13. Verbundseparator für eine Lithiumionenbatterie gemäß einem der Ansprüche 1 bis 12, wobei eine Partikelgröße D50 der anorganischen Partikel D50 < 3 µm beträgt und eine Partikelgröße D100 der anorganischen Partikel D100 < 15 µm beträgt.

14. Verbundseparator für eine Lithiumionenbatterie gemäß einem der Ansprüche 1 bis 13, wobei die Partikelgröße D50 der anorganischen Partikel 0,3 µm < D50 beträgt und die Partikelgröße D100 der anorganischen Partikel 1 µm < D100 beträgt.

15. Verbundseparator für eine Lithiumionenbatterie gemäß einem der Ansprüche 1 bis 14, wobei eine Dicke des Verbundseparators in einem Bereich von 6 µm - 30 µm liegt.

16. Verbundseparator für eine Lithiumionenbatterie gemäß einem der Ansprüche 1 bis 15, wobei eine Dicke der Beschichtungsschicht in einem Bereich von 2 µm - 6 µm liegt.

17. Verbundseparator für eine Lithiumionenbatterie gemäß einem der Ansprüche 1 bis 16, wobei die Beschichtungsschicht auf einer einzelnen Oberfläche oder doppelten Oberflächen des Polyolefinsubstrats gebildet ist.

18. Verfahren zur Herstellung eines Verbundseparators für eine Lithiumionenbatterie, umfassend:
Verwenden von anorganischen Pulverpartikeln mit einer Kristallstruktur, die kovalent bindende -OH funktionelle Gruppe enthält, und einen wässrigen Binder, der -CO- oder -CN funktionelle Gruppe enthält,
Bilden einer Beschichtungsschicht, die den Binder und die anorganischen Partikel umfasst,
**dadurch gekennzeichnet, dass** eine Partikelgröße D100 der anorganischen Partikel 1 µm < D100 < 15 µm beträgt.

19. Verfahren zur Herstellung eines Verbundseparators für eine Lithiumionenbatterie gemäß Anspruch 18, umfassend:
Rühren von anorganischen Pulverpartikeln, die eine Kristallstruktur aufweisen, die eine spezifische kovalente Bindung -OH funktionelle Gruppe enthält, mit Lösungsmittel;
Zugeben von wässrigem Binder, das -CO- oder -CN funktionelle Gruppe enthält, und Rühren;
Dispergieren, und Erhalten einer Dispersionsaufschlämmung zur Beschichtung;
Aufschichten der Dispersionsaufschlämmung auf wenigstens eine der Oberflächen des Polyolefinsubstrats;
Trocknen und Aufwickeln.

20. Verfahren zur Herstellung eines Verbundseparators für eine Lithiumionenbatterie gemäß Ansprüchen 18 oder 19, wobei bei dem Schritt des Zugebens von wässrigem Binder, das -CO- oder -CN funktionelle Gruppe enthält, Carboxymethylcellulose (CMC) zugegeben wird.

21. Lithiumionenbatterie, umfassend den Verbundseparator für eine Lithiumionenbatterie gemäß einem der Ansprüche 1-17.

## Revendications

1. Séparateur composite pour une batterie aux ions lithium, comprenant un substrat polyoléfinique et une couche de revêtement formée sur une surface du substrat polyoléfinique, la couche de revêtement comprenant un liant et des particules inorganiques, une liaison hydrogène étant formée entre le liant et les particules inorganiques, le liant comprenant un liant aqueux contenant un groupe fonctionnel -CO- ou -CN, et les particules inorganiques contenant un groupe fonctionnel -OH, **caractérisé en ce qu'**une taille de particules D100 des particules inorganiques est 1 µm < D100 < 15 µm.

2. Séparateur composite pour une batterie aux ions lithium selon la revendication 1, dans lequel le liant est formé par polymérisation d'un ou plusieurs monomères choisis dans un groupe constitué par un acrylate, un carboxylate d'alcényle, et un alcénylnitrile.

3. Séparateur composite pour une batterie aux ions lithium selon la revendication 2, dans lequel l'acrylate est un monomère ayant une formule structurale représentée par la formule 1 : 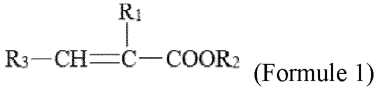 dans laquelle R₁ représente indépendamment H ou un alkyle ayant 1-3 atomes de carbone, R₂ représente indépendamment un alkyle ayant 1-4 atomes de carbone, et R₃ représente indépendamment H ou un alkyle ayant 1-3 atomes de carbone.

4. Séparateur composite pour une batterie aux ions lithium selon la revendication 2, dans lequel le carboxylate d'alcényle est un monomère ayant une formule structurale représentée par la formule 2 :
R₄-CH₂COOR₅ (Formule 2)
dans laquelle R₅ représente indépendamment un alcényle ayant 2-4 atomes de carbone, et R₄ représente indépendamment H ou un alkyle ayant 1-3 atomes de carbone.

5. Séparateur composite pour une batterie aux ions lithium selon la revendication 2, dans lequel l'alcénylnitrile est un monomère ayant une formule structurale représentée par la formule 3 :
R₆-CN (Formule 3)
dans laquelle R₅ représente indépendamment un alcényle ayant 2-5 atomes de carbone.

6. Séparateur composite pour une batterie aux ions lithium selon la revendication 2 ou 3, dans lequel l'acrylate est l'acrylate de méthyle, l'acrylate d'éthyle, le méthacrylate de méthyle, ou le méthacrylate d'éthyle.

7. Séparateur composite pour une batterie aux ions lithium selon la revendication 2 ou 4, dans lequel le carboxylate d'alcényle est l'acétate de vinyle.

8. Séparateur composite pour une batterie aux ions lithium selon la revendication 2 ou 5, dans lequel l'alcénylnitrile est l'acrylonitrile.

9. Séparateur composite pour une batterie aux ions lithium selon l'une quelconque des revendications 2 à 8, la polymérisation étant une polymérisation en masse et/ou une polymérisation en émulsion.

10. Séparateur composite pour une batterie aux ions lithium selon l'une quelconque des revendications 2 à 9, des réactifs et additifs dans la polymérisation pouvant être ajoutés pendant la polymérisation, les réactifs et additifs dans la polymérisation en incluant de préférence au moins un parmi un initiateur, un catalyseur, un émulsifiant, un dispersant, un régulateur de poids moléculaire, et un terminateur.

11. Séparateur composite pour une batterie aux ions lithium selon l'une quelconque des revendications 1 à 10, dans lequel le liant comprend en outre de la carboxyméthylcellulose (CMC).

12. Séparateur composite pour une batterie aux ions lithium selon l'une quelconque des revendications 1 à 11, dans lequel les particules inorganiques sont choisies dans un groupe constitué par des particules de boehmite, des particules d'hydroxyde d'aluminium, des particules d'hydroxyde de magnésium, et les combinaisons de celles-ci.

13. Séparateur composite pour une batterie aux ions lithium selon l'une quelconque des revendications 1 à 12, dans lequel une taille de particules D50 des particules inorganiques est D50 < 3 µm, et une taille de particules D100 des particules inorganiques est D100 < 15 µm.

14. Séparateur composite pour une batterie aux ions lithium selon l'une quelconque des revendications 1 à 13, dans lequel la taille de particules D50 des particules inorganiques est 0,3 µm < D50, et la taille de particules D100 des particules inorganiques est 1 µm < D100.

15. Séparateur composite pour une batterie aux ions lithium selon l'une quelconque des revendications 1 à 14, une épaisseur du séparateur composite se situant dans une gamme de 6 µm-30 µm.

16. Séparateur composite pour une batterie aux ions lithium selon l'une quelconque des revendications 1 à 15, une épaisseur de la couche de revêtement se situant dans une gamme de 2 µm-6 µm.

17. Séparateur composite pour une batterie aux ions lithium selon l'une quelconque des revendications 1 à 16, dans lequel la couche de revêtement est formée sur une seule surface ou deux surfaces du substrat polyoléfinique.

18. Procédé de préparation d'un séparateur composite pour une batterie aux ions lithium, comprenant :
au moyen de particules de poudre inorganique avec une structure cristalline contenant un groupe fonctionnel -OH à liaison covalente, et d'un liant aqueux contenant un groupe fonctionnel -CO- ou -CN,
la formation d'une couche de revêtement comprenant le liant et les particules inorganiques,
**caractérisé en ce qu'**une taille de particules D100 des particules inorganiques est 1 µm < D100 < 15 µm.

19. Procédé de préparation d'un séparateur composite pour une batterie aux ions lithium selon la revendication 18, comprenant les étapes suivantes :
agitation de particules de poudre inorganique avec une structure cristalline contenant un groupe fonctionnel -OH à liaison covalente spécifique avec un solvant ;
ajout d'un liant aqueux contenant un groupe fonctionnel -CO- ou -CN et agitation ;
dispersion, et obtention d'une suspension dispersée à déposer ;
dépôt de la suspension dispersée sur au moins une des surfaces du substrat polyoléfinique ;
séchage et enroulement.

20. Procédé de préparation d'un séparateur composite pour une batterie aux ions lithium selon la revendication 18 ou 19, dans lequel de la carboxyméthylcellulose (CMC) est ajoutée à l'étape d'ajout d'un liant aqueux contenant un groupe fonctionnel -CO- ou -CN.

21. Batterie aux ions lithium, comprenant le séparateur composite pour une batterie aux ions lithium selon l'une quelconque des revendications 1 à 17.
